# EUROPÄISCHE PATENTSCHRIFT

(11) **EP 4 288 271 B1**
(45) Veröffentlichungstag und Bekanntmachung des Hinweises auf die Patenterteilung: **02.07.2025**
(21) Anmeldenummer: 22703927.8
(22) Anmeldetag: 04.02.2022
(51) Int. Cl.: B29C 63/00, B29D 23/00, B29C 48/09, B29C 48/154

(54) **VERFAHREN ZUM BESCHICHTEN EINES TEXTILEN SCHLAUCHS MIT EINEM THERMOPLASTISCHEN DICHTMATERIAL**
METHOD FOR COATING A TEXTILE HOSE WITH A THERMOPLASTIC SEALING MATERIAL
PROCÉDÉ POUR MUNIR UN TUYAU FLEXIBLE TEXTILE D'UN REVÊTEMENT EN MATÉRIAU D'ÉTANCHÉITÉ THERMOPLASTIQUE

(30) Priorität: 04.02.2021 DE 102021102588
(43) Veröffentlichungstag der Anmeldung: 13.12.2023
(73) Patentinhaber: KOB GmbH, 67752 Wolfstein (DE)
(72) Erfinder: PANTEN, Andre, 48599 Gronau (DE)
(74) Vertreter: DREISS Patentanwälte PartG mbB
(86) Internationale Anmeldenummer: PCT/EP2022/052656
(87) Internationale Veröffentlichungsnummer: WO 2022/167557

(56) Entgegenhaltungen:
- WO-A1-01/58664
- DE-A1- 102013 108 760
- DE-A1- 2 137 059
- GB-A- 1 081 417
- US-A- 3 418 404

## Beschreibung

Die Erfindung betrifft ein Verfahren zum Beschichten eines textilen Schlauchs mit einem thermoplastischen Dichtmaterial, wobei der textile Schlauch eine Längsrichtung und eine Umfangsrichtung aufweist und in der Längsrichtung und in der Umfangsrichtung durchgehend gefertigt ist, insbesondere von einem Rundstrickschlauch gebildet ist.

Mit thermoplastischem Dichtmaterial beschichtete textile Schläuche werden seit einiger Zeit für die Innenrohrsanierung, insbesondere von Kanalrohren und Abflussrohren, aber durchaus auch bei anderer medienführender Verrohrung, eingesetzt. Typischerweise wird dabei bislang entweder ein Flachmaterial beschichtet und im Anschluss daran in eine rohrförmige Form oder Schlauchform gebracht, wobei dann zwangsläufig eine störende Naht entsteht, oder ein in Umfangsrichtung durchgehender Rundschlauch, wird in eine ebene flachgefaltete Form gebracht und von beiden Seiten beschichtet, wobei dabei ein unbeschichteter oder schlecht beschichteter Bereich entlang der jeweiligen Faltlinie gebildet wird.

Aus DE 2137059 A ist eine Vorrichtung und ein Verfahren zum Herstellen von Kunststoffrohren oder Kunststoffschläuchen mit einer netzförmigen oder gewebten schlauchförmigen verstärkenden Einlage vorbekannt. Diese verstärkende Einlage wird von unten nach oben über einen vertikal orientierten und von unten unter Zwischenordnung der schlauchförmigen verstärkenden Einlage gestützten Dorn gezogen und dabei von innen und außen mit fließfähigem Kunststoff beschichtet und durchdrungen. Der oberhalb des Dorns nach oben abgezogene rohr- oder schlauchförmige Körper wird durch eine dort vorgesehene Heizvorrichtung hindurchgeführt und dabei durch Wärme gehärtet. Im Unterschied hierzu soll mittels des hier in Rede stehenden Verfahrens ein Schlauch erhalten werden, der in eine typischerweise flachgelegte Lagerform überführt wird oder direkt zur Auskleidung eines weiteren rohrförmigen Körpers weiterverwendet wird.

WO 01/58664 A1 offenbart ein Verfahren und eine Vorrichtung, wonach außerhalb eines sehr kurz bauenden Dorns und um diesen Dorn herum ein steifer oder nachgiebiger zylindrischer Körper aus synthetischen Fäden durch Weben erst kontinuierlich hergestellt und in axialer Richtung nach unten gefördert wird. Es wird also kein Schlauch der Beschichtungsvorrichtung zugeführt und auf einen in der Längsrichtung und ungefähr in vertikaler Richtung erstreckten Dorn kontinuierlich aufgezogen, sondern der nachgiebige zylindrische Körper wird erst um den kurz bauenden Dorn herum gebildet. Der kurz bauende Dorn ist auch von oben gehalten und ist fester Bestandteil einer Einrichtung zum Zuführen flüssigen Kunststoffs. Er umfasst Fließkanäle für schmelzbaren Kunststoff, die von innen an die Innenseite des zylindrischen Körpers ausmünden, so dass dieser von innen beschichtet werden kann. Nach Verlassen des kurz bauenden Dorns wird der innen beschichtete zylindrische Körper von innen mit zugeführter Luft gekühlt.

GB 1.081.417 A offenbart ein Verfahren und eine Vorrichtung bei der ein extrudierter, also nicht textiler Innenschlauch zugeführt und dabei in einem Walzenspalt außenseitig mit Schmelzkleber 4 beschichtet wird. Er wird dann in Säulenform aufgeweitet durch eine vertikal orientierte Flüssigkeitsbefüllung oder alternativ durch einen Dornkörper. Während der Aufweitung wird um den Innenschlauch herum eine äußerere Gehäuseschicht gewebt oder gestrickt, und die beiden Schlauchschichten werden durch Zuführung von Wärme mittels des Schmelzklebers verbunden. Durch zwei untere Stützwalzen mit engem Walzenspalt wird der Schlauch wieder abgeflacht und dabei ein Austreten von Flüssigkeit verhindert.

US 3,418,404 A offenbart ein horizontales Verfahren und eine Vorrichtung, bei der ein textiler Schlauch aus einem äußeren textilen Mantel und einer inneren textilen Schicht gebildet wird. Diese Anordnung wird horizontal über einen Dorn durch eine Extrusionsvorrichtung hindurchgeführt und dabei in Kunststoff eingebettet.

DE 10 2013 108 760 A1 offenbart eine Vorrichtung und ein Verfahren Herstellen eines textilen Schlauchs. Ein Textilschlauch wird aus einer Mehrzahl von Fäden vorort hergestellt und unmittelbar nachfolgend in das Innere einer wohl vertikal stehenden Führungshülse eingebracht, an deren unterem Ende innen ein birnenförmiger Kopf mit einer Ringdüse einer Extrusionsvorrichtung zusammenwirkt, um einen Ringspalt zu bilden. Der birnenförmige Kopf ist axial über eine Steuerstange verstellbar, die sich nach oben durch die Führungshülse nach außen erstreckt, so dass hierdurch der Textilschaluch im Bereich der Ringdüse durch Klemmen gebremst werden kann aber auch der Ringspalt einstellbar ist.

Der vorliegenden Erfindung liegt hiervon ausgehend die Aufgabe zugrunde, ein Verfahren zu entwickeln, mittels dessen auf wirtschaftliche und prozessstabile Weise ein mit einem thermoplastischen Dichtmaterial weitgehend gleichmäßig beschichteter textiler Schlauch in einem kontinuierlichen Verfahren hergestellt werden kann.

Diese Aufgabe wird erfindungsgemäß durch ein Verfahren mit den Merkmalen des Anspruchs 1 gelöst. Gegenstand der Erfindung ist also ein Verfahren zum Beschichten eines textilen Schlauchs mit einem thermoplastischen Dichtmaterial, insbesondere auf Polyurethanbasis, in einer Beschichtungsvorrichtung wobei der textile Schlauch eine Längsrichtung und eine Umfangsrichtung aufweist und in der Längsrichtung und in der Umfangsrichtung durchgehend gefertigt ist, insbesondere von einem Rundstrickschlauch gebildet ist,
wobei der textile Schlauch der Beschichtungsvorrichtung zugeführt und auf einen in der Längsrichtung und ungefähr in vertikaler Richtung erstreckten Dorn von oben kontinuierlich aufgezogen und über diesen Dorn hinweg kontinuierlich nach unten weitertransportiert wird,
wobei der Dorn dabei durch wenigstens ein außerhalb des textilen Schlauchs vorgesehenes Stützmittel gestützt und lageorientiert wird,
wobei das Stützmittel ein Paar von Stützwalzen umfasst und der Dorn oberhalb des Paars von Stützwalzen angeordnet und erstreckt ist, so dass er sich mit einem unteren Längsende auf dem Paar von Stützwalzen abstützt, welche eine Gewichtskraft des Dorns wenigstens teilweise aufnehmen, wobei das thermoplastische Dichtmaterial in erwärmtem fließfähigem Zustand bereitgestellt und einem gesamten Außenumfang des textilen kontinuierlich über den Dorn transportierten Schlauchs zugeführt wird derart, dass das thermoplastische Dichtmaterial in den textilen Schlauch teilweise eindringen und/oder auf dem Außenumfang des textilen Schlauchs anhaften kann und eine geschlossene flächenhafte Beschichtung bildet,
wobei der so beschichtete textile Schlauch dann kontinuierlich von dem Dorn nach unten abgezogen wird, und wobei der Dorn in der Längsrichtung zwischen einem unteren und einem oberen Längsende in einem Bereich des Dorns, welcher der Beschichtung des textilen Schlauchs vorgeordnet ist, eine Querschnittsveränderung aufweist, so dass hierdurch ein Stützbund gebildet ist, und dass der Dorn an dem Stützbund von einem außerhalb des textilen Schlauchs vorgesehenen weiteren Stützmittel, also zusätzlich zu der Abstützung des Dorns an dessen unterem Ende, gestützt wird.

Es wird also erfindungsgemäß vorgeschlagen, dass der zu beschichtende textile Schlauch nicht in einem flachgelegten Zustand beschichtet wird, sondern dass er einem in der Beschichtungsvorrichtung ungefähr vertikal orientierten langgestreckten und unter Zwischenordnung des Schlauchs schwimmend gelagerten Dorn zugeführt und auf diesen Dorn von oben aufgezogen und über diesen Dorn hinweg nach unten kontinuierlich weitertransportiert und schließlich von dem Dorn wieder abgezogen wird, wobei dies in einer kontinuierlichen Verfahrensführung erfolgt und der textile Schlauch im Bereich des Dorns mit dem thermoplastischen Dichtmaterial beschichtet wird. Hierbei erstreckt sich der Dorn und der ihn umgebende Schlauch durch eine Einrichtung zum Zuführen von erschmolzenem thermoplastischem Dichtmaterial zu dem Außenumfang des textilen Schlauchs hindurch, und der endlos zugeführte textile Schlauch wird bei der Ausführung des Verfahrens kontinuierlich durch diese Einrichtung hindurchgeführt und dabei von außen mit dem thermoplastischen Dichtmaterial beschichtet. Hierbei lässt sich auch in vorteilhafter Weise eine Beschichtung mit im Wesentlichen gleichförmigem Beschichtungsflächengewicht realisieren, da insbesondere bei einer Ausbildung des Dorns mit einer im Wesentlichen zylindrischen Außenform im Bereich der Aufbringung der Beschichtung auf den textilen Schlauch eine hülsenförmige Schicht gleichförmiger Dicke ohne weiteres bereitgestellt und aufgebracht werden kann. Dies ist von Extrusionsvorrichtungen, insbesondere von Coextrusionsvorrichtungen, zur Herstellung oder Beschichtung von starren Rohren vorbekannt.

Es dürfte sich für die überwiegenden Anwendungen anbieten und als vorteilhaft erweisen, wenn der so beschichtete textile Schlauch von dem Dorn abgezogen und in eine Lagerform überführt wird. Hierbei erweist es sich als vorteilhaft, wenn der kontinuierlich von dem Dorn abgezogene Schlauch wieder in eine flachgelegte gefaltete Form überführt und dann beispielsweise in Rollenform oder Ballenform aufgewickelt oder z-förmig abgetafelt, das heißt in übereinander liegend angeordneten Lagen hin- und hergehend abgelegt wird. Es kann sich aber auch als vorteilhaft erweisen, wenn der beschichtete textile Schlauch von dem Dorn abgezogen und unmittelbar einer Weiterverarbeitung oder Weiterbehandlung zugeführt wird.

Beispielsweise könnte er direkt in einen auszukleidenden rohrförmigen Körper eingebracht werden. Hierbei erweist es sich als vorteilhaft, wenn der Schlauch im invertierten Zustand in den auszukleidenden rohrförmigen Körper eingebracht wird, so dass seine mit thermoplastischem Dichtmaterial beschichtete Außenseite dann die Innenseite des ausgekleideten rohrförmigen Körpers bildet.

Um die Längserstreckung des Dorns und der Beschichtungsvorrichtung begrenzen zu können, erweist es sich als vorteilhaft, wenn der so beschichtete textile Schlauch noch im Bereich des Dorns abgekühlt wird. Dies kann in vorteilhafter Weise durch eine Luftkühlung erfolgen, die beispielsweise mittels eines luftdurchströmbaren Rings mit Luftaustrittsöffnungen erfolgen kann. Die Kühlung bzw. die zugeführte Kühlleistung bzw. die Länge der Kühlstrecke und damit auch die Länge des Dorns nach der Beschichtung des textilen Schlauchs sollten in vorteilhafter Weise so gewählt sein, dass das thermoplastische Dichtmaterial zumindest so weit abgekühlt ist, dass es im Bereich einer Abstützung des Dorns oder auch im Bereich einer auf den textilen Schlauch einwirkenden Abzugsvorrichtung nicht mehr plastisch verdrängt oder verformt wird. Hierbei hat sich eine Abkühlung auf beispielsweise unterhalb von 35°C als vorteilhaft erwiesen.

Dadurch dass sich der Dorn mit einem unteren Längsende auf dem Paar von Stützwalzen abstützt, kann die gesamte Gewichtskraft oder zumindest ein großer Teil der Gewichtskraft des Dorns samt des ihn umgebenden textilen Schlauchs und des darauf aufgebrachten thermoplastischen Dichtmaterials aufgenommen werden. Es werden erfindungsgemäß aber zusätzlich Stützmittel verwendet werden, welche am Außenumfang des Dorns stützend angreifen. Dies wird nachfolgend noch ausgeführt werden.

Weiter kann es sich als vorteilhaft erweisen, wenn der Dorn einen lang gestreckten Dornkörper und an seinem unteren Längsende einen Formstützkörper aufweist, mittels dessen der Dorn auf dem Stützmittel abgestützt wird, insbesondere wobei der Formstützkörper bezüglich des Dornkörpers in der Längsrichtung verstellbar sein kann. Dieser Formstützkörper kann einstückig mit dem übrigen Dornkörper ausgebildet sein, oder er kann als hiervon separater Körper an den Dornkörper angefügt sein. Dies erweist sich als vorteilhaft, weil der Formstützkörper entsprechend einem jeweiligen in der Vorrichtung verwandten Stützmittel spezifisch komplementär ausgebildet werden kann. Er kann auch aus einem von dem Dornkörper verschiedenen Material ausgebildet sein. Er kann auch bei Verschleiß gegen einen neuen Formstützkörper ausgetauscht werden, sofern er in vorteilhafter Weise lösbar gegenüber dem Dornkörper vorgesehen wird. Wenn eine Längenverstellbarkeit zu dem Dornkörper, beispielsweise durch Verwendung einer Gewindespindel oder durch teleskopierbare oder sonstige Verbindungsmittel vorgesehen wird, so lässt sich eine Feinjustierung der Komponenten einer Beschichtungsvorrichtung realisieren.

Weiter erweist es sich als vorteilhaft, wenn der Formstützkörper mit dem Stützmittel derart komplementär zusammenwirkt, dass der Dorn nicht nur vertikal gestützt wird, sondern zusätzlich in lateraler Richtung und/oder in Umfangsrichtung des Dorns lagestabilisiert wird.

In Weiterbildung dieses Gedankens erweist es sich als vorteilhaft, wenn der Formstützkörper bereichsweise ungefähr komplementär zu einem sich verjüngenden Walzenspalt bei einem Paar von Stützwalzen ausgebildet ist, so dass er in den Walzenspalt teilweise eingreifen kann und dadurch lagestabilisiert wird. Hierdurch wird der Dorn also gegen Verdrehen in der Umfangsrichtung gehindert und damit lagestabilisiert. Auch ist er quer zum Walzenspalt in lateraler, also horizontaler Richtung, unverschieblich gestellt und auch hierdurch lagestabilisiert.

Nach einem weiteren Gedanken wird vorgeschlagen, dass der Dorn an seinem unteren Ende oder der Formstützkörper wenigstens eine oder vorzugsweise zwei parallel zueinander angeordnete Rollen aufweist, welche unter Zwischenordnung des beschichteten textilen Schlauchs gegen das Stützmittel für den Dorn, insbesondere gegen ein Paar von Stützwalzen, abrollen können. Hierdurch kann sich das Abgleiten des beschichteten textilen Schlauchs über den Dorn und damit auch das Abziehen des beschichten textilen Schlauchs widerstandsärmer gestalten. Dies bringt den weiteren Vorteil mit sich, dass in geringerem Umfang Zugkräfte in den textilen Schlauch eingeleitet werden müssen.

Nach der Erfindung wird wie schon erwähnt vorgeschlagen, dass der Dorn in der Längsrichtung zwischen einem unteren und einem oberen Längsende eine Querschnittsveränderung aufweist, so dass hierdurch ein Stützbund gebildet ist, und dass der Dorn an dem Stützbund von einem außerhalb des textilen Schlauchs vorgesehenen Stützmittel gestützt wird. Diese am Außenumfang des Dorns angreifende Stützung ist wie eingangs schon erwähnt zusätzlich zu einer Abstützung des Dorns an dessen unteren Ende verwirklicht. Diese Abstützung erfolgt ferner in einem Bereich des Dorns, welcher der Beschichtung des textilen Schlauchs vorgeordnet ist. Durch eine derartige zusätzliche Abstützung am Außenumfang des Dorns kann eine Zentrierung der schwimmenden Lagerung des Dorns innerhalb der Beschichtungsvorrichtung realisiert werden. Die am Außenumfang des Dorns angreifende Stützung kann also zentrierend und/oder in der vertikalen Richtung stützend erfolgen. Vorzugsweise erfolgt die Stützung sowohl zentrierend als auch in der vertikalen Richtung stützend, also tragend.

In Weiterbildung dieses Gedankens erweist es sich als vorteilhaft, wenn das Stützmittel von einem Paar von gegenüberliegenden Stützwalzen gebildet ist, insbesondere von einem ersten Paar von Stützwalzen und von einem zweiten Paar von Stützwalzen, welches gegenüber dem ersten Paar von Stützwalzen um 90° gegenüber der vertikalen Richtung verdreht angeordnet ist. Als ganz besonders vorteilhaft erweist es sich, wenn zumindest einige dieser Stützwalzen quer zur Längserstreckung des Dorns verstellbar ausgebildet werden können. Dies erleichtert das Einsetzen und Entnehmen des Dorns aus der Vorrichtung und auch das anfängliche Überstülpen des textilen Schlauchs über den Dorn. Auch wird hierdurch eine Feinjustierung ermöglicht derart, dass entsprechend der Dicke des textilen Schlauchs ein optimales Spiel für eine durch den Schlauch zwar schwimmende aber dennoch lagestabilisierte Anordnung des Dorns innerhalb der Beschichtungsvorrichtung eingestellt werden kann.

Im Hinblick auf eine kostengünstige Lagerhaltung und Verfahrensführung erweist es sich als vorteilhaft, wenn der textile Schlauch in einem flach gelegten Zustand bereitgestellt und zugeführt wird und innerhalb der Beschichtungsvorrichtung in tunnelförmige Gestalt aufgeweitet und auf den Dorn aufgezogen wird.

Es kann sich auch als vorteilhaft erweisen, wenn auf dem Außenumfang des textilen kontinuierlich über den Dorn transportierten Schlauchs durch Coextrusion mehrere Schichten thermoplastischen Dichtmaterials gebildet werden, wobei die mehrere Schichten aus unterschiedlichen thermoplastischen Dichtmaterialien gebildet sind in dem Sinn, dass sich die mehreren Schichten hinsichtlich wenigstens einer chemischen oder physikalischen Eigenschaft unterscheiden. Hierdurch können verschiedene Eigenschaften der mehreren Schichten durch geeignete Materialwahl realisiert werden. Insbesondere unterscheiden sich die mehreren Schichten hinsichtlich wenigstens einer chemischen oder physikalischen Eigenschaft, insbesondere hinsichtlich ihrer Klebrigkeit oder Anhaftbarkeit der oder hinsichtlich ihrer Dichtheit oder Dehnbarkeit oder Zugfestigkeit oder Weiterreißwiderstand oder Verschleißbarkeit oder elastisches Rückstellvermögen oder Gleit- oder Reibwerten.

Weiter erweist es sich als vorteilhaft, wenn als thermoplastisches Dichtmaterial ein thermoplastisches Polyester-Polyurethan (TPU), insbesondere mit einer Shore A-Härte (bestimmt nach DIN ISO 7613-1 3s) von wenigstens 60 Shore A und höchstens 95 Shore A, insbesondere 80 - 95 Shore A, insbesondere 85-95 Shore A, insbesondere 90-93 Shore A, verwendet wird.

Beispielsweise kann als innenliegende mit dem textilen Schlauch unmittelbar in Kontakt tretende Schicht eine Funktionsschicht aus einem Heißschmelzklebematerial verwendet werden. Diese innenliegende Schicht bildet zu dem textilen Schlauch eine Haftkraft des Schichtenverbunds von wenigstens 1200 cN/cm aus. Diese Schicht weist vorzugsweise eine Dicke von 5-50 µm, insbesondere von 5-40 µm, insbesondere von 5-30 µm, insbesondere von 5-20 µm und weiter insbesondere von 5-15 µm auf.

Weiter wird vorgeschlagen, dass eine sich daran außen anschließende Schicht vorgesehen wird, welche die primären Erfordernisse hinsichtlich Dichtheit und/oder Dehnbarkeit und/oder Zugfestigkeit und/oder Weiterreißfestigkeit und/oder Verschleißbarkeit und/oder elastisches Rückstellvermögen der Beschichtung maßgeblich bestimmt. Diese typischerweise mittlere Schicht weist vorzugsweise eine Dicke von wenigstens 50 µm, insbesondere von wenigstens 70 µm, insbesondere von wenigstens 80 µm und weiter vorzugsweise von höchstens 500 µm, insbesondere von höchstens 400 µm, insbesondere von höchstens 300 µm, insbesondere von höchstens 250 µm, insbesondere von höchstens 200 µm, insbesondere von höchstens 180 µm auf. Sie ist vorzugsweise auf Basis eines thermoplastischen Polyester-Polyurethans (TPU) ausgebildet.

Schließlich erweisen sich als vorteilhaft, wenn eine außen liegende Schicht, typischerweise als dritte Schicht und weiter typischerweise auf Basis eines thermoplastischen Polyester-Polyurethans (TPU) vorgesehen ist, die im Hinblick auf die Einstellung von optimalen Gleit- und Reibwerten ausgebildet ist. Sie weiß dann einen geringeren Gleit- und Reibwert auf als die daran nach innen angrenzenden Schichten. Sie kann Vorteilhafterweise mit einer eher geringen Wanddicke von vorzugsweise wenigstens 30 µm, insbesondere wenigstens 4 µm, insbesondere wenigstens 5 µm und weiter insbesondere höchstens 20 µm, insbesondere höchstens 15 µm, insbesondere höchstens 10 µm ausgebildet werden. Eine Wanddicke von 4-6 µm hat sich bei dieser Schicht als hinreichend erwiesen.

Die Gesamtdicke der Beschichtung, die wie vorausgehend erläutert aus mehreren coextrudierten Schichten bestehen kann, kann in vorteilhafter Weise wenigstens 70 µm, insbesondere wenigstens 80 µm, insbesondere wenigstens 90 µm und weiter insbesondere höchstens 600 µm, insbesondere höchstens 500 µm, insbesondere höchstens 400 µm, insbesondere höchstens 300 µm, insbesondere höchstens 250 µm, insbesondere höchstens 200 µm, insbesondere höchstens 180 µm betragen. Im Hinblick auf geringe Materialkosten sind geringe Wanddicken bevorzugt.

Gegenstand der Erfindung ist des Weiteren eine Beschichtungsvorrichtung zur Ausführung des vorausgehend beschriebenen Verfahrens mit den Merkmalen des Anspruchs 9.

Die erfindungsgemäße Beschichtungsvorrichtung kann weiter eine von der Abzugseinrichtung gebildete oder der Abzugseinrichtung nachgeordnete Einrichtung zum Überführen des beschichteten textilen Schlauchs in eine Lagerform umfassen. Es könnte auch eine Einrichtung zur Weiterbehandlung oder Weiterverwendung des beschichteten Schlauchs vorgesehen sein, insbesondere eine Einrichtung zum Einbringen des beschichteten textilen Schlauchs in einen auszukleidenden rohrförmigen Körper.

Wird weiter vorgeschlagen, dass eine Kühleinrichtung vorgesehen ist, zum Kühlen des mit thermoplastischem Dichtmaterial beschichteten textilen Schlauchs, wobei die Kühleinrichtung der Einrichtung zum Zuführen von erschmolzenem thermoplastischem Dichtmaterial zu dem Außenumfang des textilen Schlauchs nachgeordnet ist.

Um das Überziehen des Schlauchs über den Dorn zu erleichtern, erweist es sich als vorteilhaft, wenn der Dorn einen langgestreckten Dornkörper aufweist und seinem oberen Ende verjüngt, und vorzugsweise verrundet ausgebildet ist.

Der Dorn weist vorzugsweise eine polierte Oberfläche auf, insbesondere mit einer Rauigkeit von höchstens 0,3 Ra/µm, die beispielsweise nach DIN EN ISO 4287:1998 bestimmt werden kann.

Es ist auch denkbar und vorteilhaft, dass der Dorn eine reibungsreduzierende Beschichtung auf seiner Oberfläche aufweist.

Nach einer weiteren Ausführungsform ist vorgesehen, dass der Dorn einen lang gestreckten Dornkörper und an seinem unteren Längsende einen Formstützkörper aufweist, mittels dessen der Dorn auf dem Stützmittel abstützbar ist, insbesondere wobei der Formstützkörper bezüglich des Dornkörpers in der Längsrichtung verstellbar sein kann. Der Formstützkörper kann insbesondere einstückig mit dem Dorn ausgebildet sein. Indessen erweist es sich als vorteilhaft, wenn der Formstützkörper von dem langgestreckten Dornkörper lösbar ist, also bei Verschleiß ausgetauscht werden kann.

Bei einer weiteren Ausführungsform kann vorgesehen sein, dass der Formstützkörper wenigstens eine oder vorzugsweise zwei parallel zueinander angeordnete Rollen aufweist, welche unter Zwischenordnung des beschichteten textilen Schlauchs gegen das Stützmittel für den Dorn, insbesondere gegen ein Paar von Stützwalzen, abrollen können.

Das vorgenannte Stützmittel kann auch von einem Paar von gegenüberliegenden Stützwalzen gebildet sein, insbesondere von einem ersten Paar von Stützwalzen und von einem zweiten Paar von Stützwalzen, welches gegenüber dem ersten Paar von Stützwalzen um 90° versetzt angeordnet ist, gebildet ist.

Es erweist sich als vorteilhaft, dass die Zuführ- und Transporteinrichtung so ausgebildet ist, dass sie den textilen Schlauch in flach gelegtem Zustand in Richtung auf den Dorn zuführt und im aufgeweiteten Zustand über den Dorn weitertransportiert.

Weiter erweist sich als vorteilhaft, dass die Einrichtung zum Zuführen von erschmolzenem thermoplastischem Dichtmaterial zu dem Außenumfang des textilen Schlauchs so ausgebildet ist, dass durch Coextrusion mehrere Schichten thermoplastischen Dichtmaterials auf dem Außenumfang des textilen Schlauchs gebildet werden, wobei die mehreren Schichten insbesondere aus unterschiedlichen thermoplastischen Dichtmaterialien gebildet sind.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Verfahrens und der erfindungsgemäßen Beschichtungsvorrichtung.

In der Zeichnung zeigt:
- Figur 1: eine schematische Darstellung wesentlicher Komponenten einer Ausführungsform der erfindungsgemäßen Beschichtungsvorrichtung und eines durch die Beschichtungsvorrichtung kontinuierlich hindurchgeförderten textilen Schlauchs;
- Figur 2: eine schematische Darstellung einer weiteren Ausführungsform eines unteren Endbereichs eines Dorns

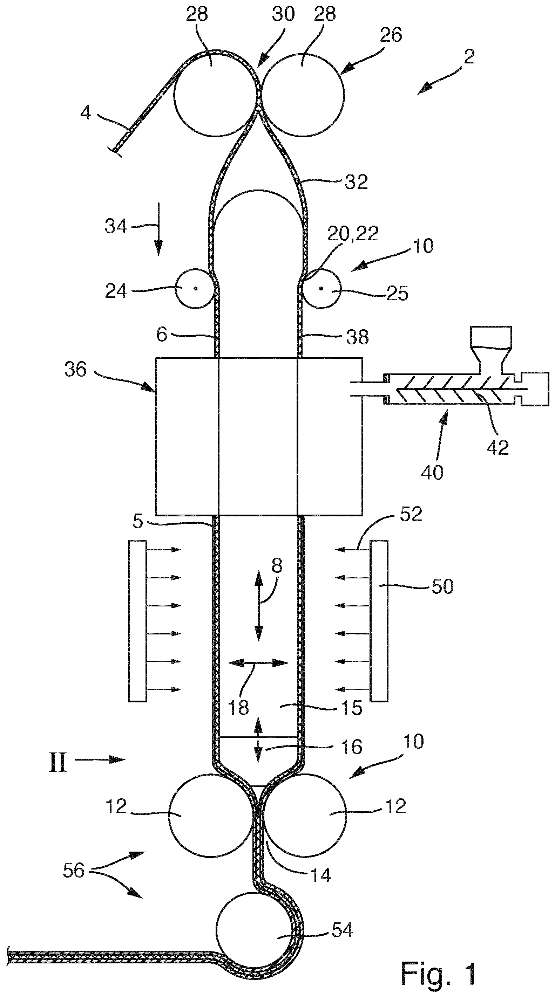

Figur 1 verdeutlicht schematisch einige wesentliche Komponenten einer insgesamt mit dem Bezugszeichen 2 bezeichneten erfindungsgemäßen Beschichtungsvorrichtung zum Beschichten eines endlos und kontinuierlich zugeführten textilen Schlauchs 4 mit einem thermoplastischen Dichtmaterial 5, dessen Dicke in den Figuren nicht maßstabsgetreu sondern zur besseren Wahrnehmung übertrieben dick dargestellt ist. Das wesentlichste Element der erfindungsgemäßen Beschichtungsvorrichtung 2 bildet ein langgestreckter stangenförmiger Dorn 6, auf welchen der Schlauch 4 kontinuierlich aufgezogen und über den Dorn hinwegbewegt und schließlich von dem Dorn wieder abgezogen wird. Der textile Schlauch 4 weist eine Längsrichtung und eine Umfangsrichtung auf und ist in der Längsrichtung und in der Umfangsrichtung durchgehend gefertigt, insbesondere als Rundstrickschlauch ausgebildet. Im Bereich des Dorns 6 stimmt die Längsrichtung und die Umfangsrichtung des Schlauchs 4 mit einer Längsrichtung und einer Umfangsrichtung des Dorns 6 überein.

Der stangenförmige Dorn 6 ist ungefähr in vertikaler Richtung 8 erstreckt und ausgerichtet und dabei zugleich lagestabilisiert. Dabei ist der Dorn über mehrere Stützmittel jeweils unter Zwischenordnung des ihn umgebenden textilen Schlauchs gestützt.

Ein Stützmittel 10 ist unterhalb des Dorns 6 angeordnet. Es ist von zwei Stützwalzen 12 gebildet, die zwischen sich einen Walzenspalt 14 begrenzen, durch welchen der Schlauch hindurchgeführt und von dem Dorn abgezogen wird.

Der Dorn 6 umfasst einen langgestreckten stangenförmigen Dornkörper 15 und einen an seinem unteren Ende vorzugsweise lösbar und vorzugsweise in Längsrichtung des Dorns verstellbar an dem langgestreckten Dornkörper 15 angebrachten Formstützkörper 16. Die Verstellbarkeit ist durch einen gestrichelten Pfeil angedeutet. Der Formstützkörper 16 bildet ein sich verjüngendes unteres Ende des Dorns 6 und ist hierfür zumindest bereichsweise ungefähr komplementär zu dem von den Stützwalzen 12 gebildeten Walzenspalt 14 ausgebildet. Auf diese Weise lässt sich eine lagestabilisierte Anordnung und Abstützung des Dorns 6 auf dem durch die Stützwalzen 12 gebildeten Stützmittel 10 erreichen. Der Dorn 6 ist hierdurch also nicht nur in der vertikalen Richtung 6 abgestützt, sondern auch zugleich in horizontaler Richtung 18 lagestabilisiert.

Des Weiteren weist der stangenförmige Dorn 6 weiter oben eine Querschnittsveränderung 20 derart auf, dass sich sein Durchmesser und Querschnitt nach oben hin etwas erweitert, so dass hierdurch ein verrundet ausgebildeter Stützbund 22 durch diese Querschnittsveränderung 20 gebildet ist. Im Bereich dieses Stützbunds 22 ist auf in horizontaler Richtung 18 gegenüberliegenden Seiten des Dorns ein weiteres Paar von Stützwalzen 24 vorgesehen. Wenigstens eine Stützwalze 24 ist vorzugsweise in der horizontalen Richtung 18 verstellbar, so dass eine Feinjustierung und damit eine weitere Lageorientierung des Dorns 6 erzielbar ist. Die beiden Stützwalzen 24 können aber auch eine in der vertikalen Richtung 8 wirkende Stützfunktion bei der Halterung oder auch schwimmenden Lagerung des Dorns 6 ausüben, indem sie den Dorn 6 im Bereich des Stützbunds 22 auch in der vertikalen Richtung stützen. Hierfür erweist es sich als vorteilhaft, wenn der verrundet ausgebildete Stützbund 22 und die Stützwalzen 24 zumindest ungefähr und abschnittsweise eine vergleichbare Krümmung aufweisen, so dass eine möglichst flächenhafte Unterstützung möglich ist. Dies erleichtert auch das kontinuierliche Weitertransportieren des textilen Schlauchs 4 über den Dorn 6, also zwischen dem Dorn 6 und den Stützwalzen 24 hindurch. Es wäre auch denkbar, dass ein weiteres Paar von Stützwalzen um die vertikale Richtung 18 um 90° versetzt angeordnet sind und gegen den Dorn anliegen; diese wären dann hinter bzw. vor der Zeichnungsebene der Figur.

Zum Zuführen, Transportieren und Abführen des endlosen und in der Umfangsrichtung durchgehenden textilen Schlauchs 4, der insbesondere von einem Rundstrickschlauch gebildet ist, ist eine Zuführ- und Transporteinrichtung 26 schematisch durch zwei Antriebswalzen 28 angedeutet, die gegeneinander abrollen und zwischen sich wiederum einen Walzenspalt 30 bilden. Wie aus der Figur schematisch ersichtlich, kann der textile Schlauch 4 in einem ebenen flachgelegten Zustand mit seitlichen Faltkanten der Beschichtungsvorrichtung 2 zugeführt werden. Er wird dem Walzenspalt 30 zugeführt und dabei durch die Stützwalzen 24 transportiert. Den Antriebswalzen 28 nachgeordnet wird der textile Schlauch 4 dann auf und über den Dorn 6 geführt und dabei auf seine im Wesentlichen zylindrische Form gebracht. Hierbei erweist es sich als vorteilhaft, dass der Dorn 6 ein sich verjüngendes, jedoch verrundet ausgebildetes oberes Ende 32 aufweist. Der Außendurchmesser des Dorns und der Durchmesser des textilen Schlauchs 4 sind vorzugsweise so aufeinander abzustimmen, dass der Schlauch 4 beim Aufziehen keine Längsfalten bildet, dass er aber auch nicht aufgedehnt wird, so dass er sich beim anschließenden Abziehen von dem Dorn 6 nicht wieder zusammenzieht und dabei Falten bildet. Der Außendurchmesser des Dorns und der natürliche ungedehnte Innendurchmesser des textilen Schlauchs 4 entsprechen sich also im Wesentlichen.

In vertikaler Richtung 8 unterhalb der oberen Stützwalzen 24, also in einer Transportrichtung 34 des textilen Schlauchs 4 den oberen Stützwalzen 24 nachgeordnet, ist eine Einrichtung 36 zum Zuführen von erschmolzenem thermoplastischem Dichtmaterial 5 zu einem Außenumfang 38 des textilen Schlauchs 4 vorgesehen und in der Figur schematisch angedeutet. Diese Einrichtung 36 bildet eine in der vertikalen Richtung 8 erstreckte Durchgangsöffnung, durch welche sich der Dorn 6 mit dem darüber kontinuierlich transportierten textilen Schlauch 4 hindurcherstreckt. Die Einrichtung 36 wirkt zusammen mit einer Einrichtung 40 zum Erschmelzen und Bereitstellen von unter einem Extrusionsdruck stehendem fließfähigem und damit extrudierbarem thermoplastischem Dichtmaterial 5, wobei schematisch eine Schneckenfördervorrichtung 42 bei dieser Vorrichtung 40 angedeutet ist.

Die Einrichtung 36 zum Zuführen von erschmolzenem thermoplastischem Dichtmaterial 5 zum Außenumfang 38 des textilen Schlauchs 4 ist also ein Werkzeug, welches dazu ausgebildet ist, das von der Einrichtung 40 zugeführte erschmolzene und unter Extrusionsdruck stehende thermoplastische Material dem Außenumfang 38 des Schlauchs 4 möglichst gleichmäßig zuzuführen. Hierfür können sogenannte Zirkularverteiler bei der Einrichtung 36 eingesetzt werden, welche dazu ausgebildet sind, ein extrudierbares thermoplastisches Material um einen zu beschichtenden Außenumfang einer Pinole im Wesentlichen gleichförmig zu verteilen, wobei der Dorn 6 mit dem darüber gezogenen textilen Schlauch als Pinole eines solchen Extrusionswerkzeugs fungiert und beschichtet wird. Es ist auch denkbar, dass die Einrichtung 36 zum Zuführen von erschmolzenem thermoplastischem Dichtmaterial zu dem Außenumfang des textilen Schlauchs als Coextrusionswerkzeug ausgebildet ist, so dass nicht nur eine einzige Schicht thermoplastischen Dichtmaterials, sondern mehrere solcher Schichten konzentrisch übereinander ausgebildet werden können. Hierfür werden dann mehrere Einrichtungen 40 zum Erschmelzen und Zuführen von thermoplastischem Dichtmaterial vorzugsweise in Umfangsrichtung um den Dorn 6 versetzt zueinander angeordnet, so dass sie jeweils radial nach innen mit der Einrichtung 36 zum Zuführen von erschmolzenem thermoplastischem Dichtmaterial verbunden werden können.

Beim Hindurchführen des endlos und kontinuierlich transportierten textilen Schlauchs 4 durch die Einrichtung 36 hindurch wird auf den Außenumfang 38 des textilen Schlauchs 4 eine ein- oder mehrschichtige extrudierte bzw. coextrudierte Schicht thermoplastischen Dichtmaterials 5 mit vorzugsweise im Wesentlichen gleichförmigem Beschichtungsflächengewicht aufgebracht, so dass der die Einrichtung 36 verlassende textile Schlauch 4 diese Schicht aus dann möglicherweise noch fließfähigem thermoplastischem Dichtmaterial 5 aufweist. Um diese Schicht aus thermoplastischem Dichtmaterial zu stabilisieren, ist in Transportrichtung 34 der Einrichtung 36 nachgeordnet eine schematisch angedeutete Kühleinrichtung 50 vorgesehen, welche den Dorn 6 vorzugsweise konzentrisch umgibt und diesen mit nach radial innen strömender kühlender Luft 52 beaufschlagt, so dass das thermoplastische Dichtmaterial 5 beim Verlassen des Bereichs der Kühleinrichtung 50 auf Temperaturen von vorzugsweise unter 35°C und jedenfalls unterhalb einer Erweichungstemperatur des thermoplastischen Dichtmaterials abgekühlt ist.

Die eingangs erwähnten Stützwalzen 12 und eine weitere Abzugswalze 54 bilden eine Abzugseinrichtung 56 zum Abziehen des beschichteten textilen Schlauchs 4. Nach der Abzugseinrichtung 56 oder mittels der Abzugseinrichtung 56 kann der beschichtete textile Schlauch 4 in eine Lagerform überführt werden. Er kann hierfür insbesondere in eine Rollen- oder Ballenform aufgerollt bzw. aufgewickelt werden. Es wäre aber auch denkbar, dass der Abzugseinrichtung 56 nachgeordnet eine weitere Bearbeitung oder Behandlung des beschichteten textilen Schlauchs 4 ausgeführt wird, insbesondere könnte der beschichtete textile Schlauch 4 direkt in ein innen auszukleidendes Rohr eingebracht werden.

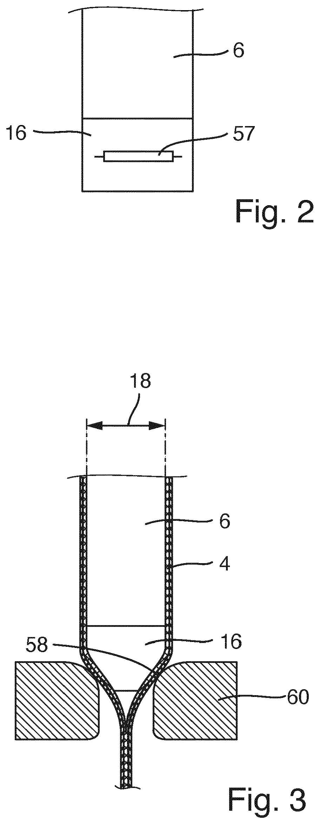

Figur 2 verdeutlicht eine weitere Ausgestaltung, wonach am unteren Ende des Dorns 6 bzw. in dem hier dargestellten Fall bei dem unten angefügten Formstützkörper 16 insbesondere zwei vorzugsweise nadelgelagerte Rollen 57 auf gegenüberliegenden Seiten des Formstützkörpers 16 vorgesehen sind, welche unter Zwischenordnung des beschichteten textilen Schlauchs 4 gegen die jeweilige Stützwalze 12 abrollen. Hierdurch kann der Widerstand beim Abziehen des beschichteten Schlauchs 4 weiter reduziert werden. Figur zwei betrachtet den Dorn 6 in Richtung des Pfeils II in Figur 1, wobei der textile Schlauch 4 und die Stützwalzen 12 weggelassen sind.

Mit der vorliegenden Erfindung ist es nicht nur möglich, einen textilen Schlauch, insbesondere für die intendierte Verwendung zur Innenauskleidung von Rohren, kostengünstiger herzustellen, sondern es lässt sich auch eine Qualitätsverbesserung hinsichtlich der Gleichförmigkeit der Beschichtung mit dem thermoplastischen Dichtmaterial erreichen.

## Patentansprüche

1. Verfahren zum Beschichten eines textilen Schlauchs (4) mit einem thermoplastischen Dichtmaterial (5), insbesondere auf Polyurethanbasis, in einer Beschichtungsvorrichtung (2) wobei der textile Schlauch (4) eine Längsrichtung und eine Umfangsrichtung aufweist und in der Längsrichtung und in der Umfangsrichtung durchgehend gefertigt ist, insbesondere von einem Rundstrickschlauch gebildet ist,
wobei der textile Schlauch (4) der Beschichtungsvorrichtung (2) zugeführt und auf einen in der Längsrichtung und ungefähr in vertikaler Richtung (8) erstreckten Dorn (6) von oben kontinuierlich aufgezogen und über diesen Dorn (6) hinweg kontinuierlich nach unten weitertransportiert wird,
wobei der Dorn (6) dabei durch wenigstens ein außerhalb des textilen Schlauchs (4) vorgesehenes Stützmittel (10) gestützt und lageorientiert wird, wobei das Stützmittel (10) ein Paar von Stützwalzen (12) umfasst und der Dorn (6) oberhalb des Paars von Stützwalzen (12) angeordnet und erstreckt ist, so dass er sich mit einem unteren Längsende auf dem Paar von Stützwalzen (12) abstützt, welche eine Gewichtskraft des Dorns wenigstens teilweise aufnehmen,
wobei das thermoplastische Dichtmaterial (5) in erwärmtem fließfähigem Zustand bereitgestellt und einem gesamten Außenumfang (38) des textilen kontinuierlich über den Dorn (6) transportierten Schlauchs (4) zugeführt wird derart, dass das thermoplastische Dichtmaterial (5) in den textilen Schlauch (4) teilweise eindringen und/oder auf dem Außenumfang (38) des textilen Schlauchs (4) anhaften kann und eine geschlossene flächenhafte Beschichtung bildet,
wobei der so beschichtete textile Schlauch (4) dann kontinuierlich von dem Dorn (6) nach unten abgezogen wird,
und wobei der Dorn (6) in der Längsrichtung zwischen einem unteren und einem oberen Längsende in einem Bereich des Dorns, welcher der Beschichtung des textilen Schlauchs vorgeordnet ist, eine Querschnittsveränderung (20) aufweist, so dass hierdurch ein Stützbund (22) gebildet ist, und dass der Dorn (6) an dem Stützbund (22) von einem außerhalb des textilen Schlauchs (4) vorgesehenen weiteren Stützmittel (10), also zusätzlich zu der Abstützung des Dorns an dessen unterem Ende, gestützt wird.

2. Verfahren nach Anspruch 1, **dadurch gekennzeichnet, dass** der beschichtete textile Schlauch (4) in eine Lagerform überführt wird, insbesondere in eine flachgelegte gefaltete Form überführt und dann in Rollenform oder Ballenform aufgewickelt oder z-förmig abgetafelt, das heißt in übereinander liegend angeordneten Lagen hin- und hergehend abgelegt wird, oder direkt einer Weiterbehandlung oder Weiterverwendung zugeführt wird, insbesondere in einen auszukleidenden rohrförmigen Körper eingebracht wird.

3. Verfahren nach Anspruch 1 oder 2, **dadurch gekennzeichnet, dass** der so beschichtete textile Schlauch (4) noch im Bereich des Dorns (6) abgekühlt wird.

4. Verfahren nach einem oder mehreren der vorstehenden Ansprüche, **dadurch gekennzeichnet, dass** der Dorn (6) einen lang gestreckten Dornkörper (15) und an seinem unteren Längsende einen Formstützkörper (16) aufweist, mittels dessen der Dorn (6) auf dem Stützmittel (10) abgestützt wird, insbesondere wobei der Formstützkörper (16) bezüglich des Dornkörpers (15) in der Längsrichtung verstellbar sein kann.

5. Verfahren nach Anspruch 4, **dadurch gekennzeichnet, dass** der Formstützkörper (16) mit dem Stützmittel (10) derart komplementär zusammenwirkt, dass der Dorn (6) nicht nur vertikal gestützt wird, sondern zusätzlich in lateraler Richtung und/oder in Umfangsrichtung lagestabilisiert wird insbesondere dass der Formstützkörper (16) ungefähr komplementär zu einem sich verjüngenden Walzenspalt (14) bei einem Paar von Stützwalzen (12) ausgebildet ist, so dass er in den Walzenspalt (14) teilweise eingreifen kann und dadurch lagestabilisiert wird.

6. Verfahren nach einem oder mehreren der vorstehenden Ansprüche, **dadurch gekennzeichnet, dass** der Dorn (6) an seinem unteren Ende oder der Formstützkörper (16) wenigstens eine oder vorzugsweise zwei parallel zueinander angeordnete Rollen (57) aufweist, welche unter Zwischenordnung des beschichteten textilen Schlauchs (4) gegen das Stützmittel (10) für den Dorn (6), insbesondere gegen ein Paar von Stützwalzen (12), abrollen können.

7. Verfahren nach einem der vorstehenden Ansprüche, **dadurch gekennzeichnet, dass** das Stützmittel (10) zur Stützung des Dorns an dem Stützbund (22) von einem Paar von gegenüberliegenden Stützwalzen (24) gebildet ist, insbesondere von einem ersten Paar von Stützwalzen (24) und von einem zweiten Paar von Stützwalzen (24), welches gegenüber dem ersten Paar von Stützwalzen (24) um 90° versetzt angeordnet ist, gebildet ist.

8. Verfahren nach einem oder mehreren der vorstehenden Ansprüche, **dadurch gekennzeichnet, dass** der textile Schlauch (4) in einem flach gelegten Zustand bereitgestellt und zugeführt wird und innerhalb der Beschichtungsvorrichtung (2) in tunnelförmige Gestalt aufgeweitet und auf den Dorn (6) aufgezogen wird.

9. Beschichtungsvorrichtung (2) zur Ausführung des Verfahrens zum Beschichten eines textilen Schlauchs (4) mit einem thermoplastischen Dichtmaterial (5) nach einem oder mehreren der vorstehenden Ansprüche, umfassend
einen lang gestreckten stangenförmigen Dorn (6) und
ein Stützmittel (10) zum Stützen des Dorns (6) in einer im wesentlichen vertikalen Richtung (8), wobei sich der Dorn (6) innerhalb des textilen Schlauchs (4) befindet,
wobei das Stützmittel (10) ein Paar von Stützwalzen (12) umfasst und der Dorn (6) oberhalb des Paars von Stützwalzen (12) angeordnet und erstreckt ist, so dass er sich mit einem unteren Längsende auf dem Paar von Stützwalzen (12) abstützt, welche eine Gewichtskraft des Dorns wenigstens teilweise aufnehmen,
eine Zuführ- und Transporteinrichtung (26) zum Zuführen des textilen Schlauchs (4) von oben zu dem Dorn (6) und zum kontinuierlichen Transportieren des Schlauchs über den Dorn nach unten,
eine Einrichtung (36) zum Zuführen von erschmolzenem thermoplastischem Dichtmaterial (5) zu dem Außenumfang (38) des textilen Schlauchs (4), derart dass der Schlauch (4) mit im wesentlichen gleichförmigem Beschichtungsflächengewicht beschichtet wird, wobei sich der Dorn (6) mit dem kontinuierlich über den Dorn (6) transportierten Schlauch (4) durch diese Einrichtung (36) hindurch erstreckt,
eine Abzugseinrichtung (56) zum Abziehen des beschichteten textilen Schlauchs (4),
und wobei der Dorn (6) in der Längsrichtung zwischen einem unteren und einem oberen Längsende in einem Bereich des Dorns, welcher der Beschichtung des textilen Schlauchs vorgeordnet ist, eine Querschnittsveränderung (20) aufweist, so dass hierdurch ein Stützbund (22) gebildet ist, und dass der Dorn (6) an dem Stützbund (22) von einem außerhalb des textilen Schlauchs (4) vorgesehenen weiteren Stützmittel (10), also zusätzlich zu der Abstützung des Dorns an dessen unterem Ende, abstützbar ist.

10. Beschichtungsvorrichtung (2) nach Anspruch 9, **gekennzeichnet durch** eine Einrichtung zum Überführen des beschichteten textilen Schlauchs in eine Lagerform oder durch eine Einrichtung zum direkten Einbringen des beschichteten textilen Schlauchs in einen auszukleidenden rohrförmigen Körper.

11. Beschichtungsvorrichtung (2) nach Anspruch 9 oder 10, **dadurch gekennzeichnet, dass** eine Kühleinrichtung (50) vorgesehen ist, zum Kühlen des mit thermoplastischem Dichtmaterial (5) beschichteten textilen Schlauchs (4), wobei die Kühleinrichtung (50) der Einrichtung (36) zum Zuführen von erschmolzenem thermoplastischem Dichtmaterial (5) zu dem Außenumfang (38) des textilen Schlauchs (4) nachgeordnet ist.

12. Beschichtungsvorrichtung (2) nach einem der Ansprüche 9-11, **dadurch gekennzeichnet, dass** der Dorn (6) einen lang gestreckten Dornkörper (15) aufweist und an seinem oberen Ende (32) verjüngt, und vorzugsweise verrundet ausgebildet ist.

13. Beschichtungsvorrichtung (2) nach einem der Ansprüche 9-12, **dadurch gekennzeichnet, dass** der Dorn (6) einen lang gestreckten Dornkörper (15) und an seinem unteren Längsende einen Formstützkörper (16) aufweist, mittels dessen der Dorn (6) auf dem Stützmittel (10) abstützbar ist, insbesondere wobei der Formstützkörper (16) bezüglich des Dornkörpers (15) in der Längsrichtung verstellbar sein kann.

14. Beschichtungsvorrichtung nach Anspruch 13, **dadurch gekennzeichnet, dass** der Formstützkörper (16) wenigstens eine oder vorzugsweise zwei parallel zueinander angeordnete Rollen (57) aufweist, welche unter Zwischenordnung des beschichteten textilen Schlauchs (4) gegen das Stützmittel (10) für den Dorn (6), insbesondere gegen ein Paar von Stützwalzen (12), abrollen können.

15. Beschichtungsvorrichtung nach einem der Ansprüche 9-14 , **dadurch gekennzeichnet, dass** das Stützmittel (10) zur Stützung des Dorns an dem Stützbund (22) von einem Paar von gegenüberliegenden Stützwalzen (24) gebildet ist, insbesondere von einem ersten Paar von Stützwalzen (24) und von einem zweiten Paar von Stützwalzen, welches gegenüber dem ersten Paar von Stützwalzen (24) um 90° versetzt angeordnet ist, gebildet ist.

16. Beschichtungsvorrichtung nach einem der Ansprüche 9-15, **dadurch gekennzeichnet, dass** die Zuführ- und Transporteinrichtung (26) so ausgebildet ist, dass sie den textilen Schlauch (4) in flach gelegtem Zustand in Richtung auf den Dorn (6) zuführt und im aufgeweiteten Zustand über den Dorn (6) weitertransportiert.

## Claims

1. A method for coating a textile hose (4) with a thermoplastic sealing material (5), in particular polyurethane-based, in a coating device (2), wherein the textile hose (4) has a longitudinal direction and a circumferential direction and is manufactured continuously in the longitudinal direction and in the circumferential direction, in particular is formed from a tubular knit hose,
wherein the textile hose (4) is fed to the coating device (2) and is continuously drawn from top to down onto a mandrel (6) extending in the longitudinal direction and approximately in the vertical direction (8) and is continuously transported further downwards over this mandrel (6), wherein the mandrel (6) is supported and oriented in the correct position by at least one support means (10) provided outside the textile hose (4),
wherein the support means (10) comprises a pair of support rollers (12, 24) and the mandrel (6) is arranged and extended above the pair of support rollers (12) so that it is supported on the pair of support rollers (12) with a lower longitudinal end which at least partially absorb a weight force of the mandrel, wherein the thermoplastic sealing material (5) is provided in a heated flowable state and is fed continuously to an entire outer circumference (38) of the textile hose (4) which is continuously transported over the mandrel (6) such that some of the thermoplastic sealing material (5) can penetrate into the textile hose (4) and/or can adhere to the outer circumference (38) of the textile hose (4) and forms a closed superficial coating,
wherein the textile hose (4) coated in this way is then continuously drawn off downwards from the mandrel (6),
and wherein the mandrel (6), in the longitudinal direction between a lower and an upper longitudinal end and in an area of the mandrel, which is arranged before coating the textile hose, has a cross-sectional change (20) so that a support collar (22) is formed as a result, and wherein the mandrel (6) is supported on the support collar (22) by a further support means (10), provided outside the textile hose (4) in addition to support of the mandrel at its lower end.

2. The method according to claim 1, **characterized in that** the coated textile hose (4) is transferred into a storage form, in particular transferred into a flattened folded form and then rolled up in a roll form or bale form or cuttled in a z-shaped manner, i.e., is laid down going back and forth in layers arranged one above the other, or is directly fed to further treatment or further use, in particular is introduced into a tubular body to be lined.

3. The method according to claim 1 or 2, **characterized in that** the textile hose (4) coated in this way is cooled while still in the region of the mandrel (6).

4. The method according to one or more of the preceding claims, **characterized in that** the mandrel (6) has an elongated mandrel body (15) and a form support body (16) at its lower longitudinal end, by means of which the mandrel (6) is supported on the support means (10), in particular wherein the form support body (16) can be adjustable in the longitudinal direction with respect to the mandrel body (15).

5. The method according to claim 4, **characterized in that** the form support body (16) interacts with the support means (10) in a complementary manner in such a way that the mandrel (6) is not only supported vertically, but is additionally positionally stabilized in lateral direction and/or in circumferential direction, in particular that the form support body (16) is formed approximately complementary to a tapering roller gap (14) in a pair of support rollers (12) so that it can partially engage the roller gap (14) and is thereby positionally stabilized.

6. The method according to one or more of the preceding claims, **characterized in that** the mandrel (6) at its lower end or the form support body (16) has at least one or preferably two rollers (57) arranged parallel to one another, which, under the interposition of the coated textile hose (4), can roll against the support means (10) for the mandrel (6), in particular against a pair of support rollers (12).

7. The method according to one of the preceding claims, **characterized in that** the support means (10) for supporting the mandrel at the suport collar (22) is formed by a pair of opposing support rollers (24), in particular by a first pair of support rollers (24) and by a second pair of support rollers (24) which is arranged offset by 90° with respect to the first pair of support rollers (24).

8. The method according to one or more of the preceding claims, **characterized in that** the textile hose (4) is provided and fed in a flattened state and is expanded within the coating device (2) into a tunnel-shaped form and is drawn onto the mandrel (6).

9. A coating device (2) for carrying out the method for coating a textile hose (4) with a thermoplastic sealing material (5) according to one or more of the preceding claims, comprising
an elongated rod-shaped mandrel (6) and a support means (10) for supporting the mandrel (6) in a substantially vertical direction (8), wherein the mandrel (6) is located within the textile hose (4),
wherein the support means (10) comprises a pair of support rollers (12, 24) and the mandrel (6) is arranged and extended above the pair of support rollers (12) so that it is supported on the pair of support rollers (12) with a lower longitudinal end which at least partially absorb a weight force of the mandrel,
a feeding and transporting device (26) for feeding the textile hose (4) from above to the mandrel (6) and for continuously transporting the hose over the mandrel downwards,
a device (36) for feeding melted thermoplastic sealing material (5) to the outer circumference (38) of the textile hose (4) in such a manner that the hose (4) is coated with substantially uniform coating surface weight, wherein the mandrel (6) extends, with the hose (4) which is continuously transported over the mandrel (6), through said device (36),
a draw-off device (56) for drawing off the coated textile hose (4),
and wherein the mandrel (6), in the longitudinal direction between a lower and an upper longitudinal end and in an area of the mandrel, which is arranged before coating the textile hose, has a cross-sectional change (20) so that a support collar (22) is formed as a result, and wherein the mandrel (6) is supported on the support collar (22) by a further support means (10), provided outside the textile hose (4) in addition to support of the mandrel at its lower end.

10. The coating device (2) according to claim 9, **characterized by** a device for transferring the coated textile hose into a storage form, or by a device for directly introducing the coated textile hose into a tubular body to be lined.

11. The coating device (2) according to claim 9 or 10, **characterized in that** a cooling device (50) is provided, for cooling the textile hose (4) coated with thermoplastic sealing material (5), wherein the cooling device (50) is arranged downstream of device (36) for feeding melted thermoplastic sealing material (5) to the outer circumference (38) of the textile hose (4).

12. The coating device (2) according to any of claims 9-11, **characterized in that** the mandrel (6) has an elongated mandrel body (15) and is formed in a manner tapered, and preferably rounded, at its upper end (32).

13. The coating device (2) according to any of claims 9-12, **characterized in that** the mandrel (6) has an elongated mandrel body (15) and a form support body (16) at its lower longitudinal end, by means of which the mandrel (6) is supported on the support means (10), in particular wherein the form support body (16) can be adjusted in the longitudinal direction with respect to the mandrel body (15).

14. The coating device according to claim 13, **characterized in that** the form support body (16) has at least one or preferably two rollers (57) arranged parallel to one another, which, under interposition of the coated textile hose (4), can roll against the support means (10) for the mandrel (6), in particular against a pair of support rollers (12).

15. The coating device according to one of claims 9-14, **characterized in that** the support means (10) for supporting the mandrel at the support collar (22) is formed by a pair of opposing support rollers (24), in particular by a first pair of support rollers (24) and by a second pair of support rollers (24) which is arranged offset by 90° with respect to said first pair of support rollers (24).

16. The coating device according to any of claims 9-15, **characterized in that** the feeding and transporting device (26) is designed such that it feeds the textile hose (4) in a flattened state in the direction of the mandrel (6) and transports it further over the mandrel (6) in the expanded state.

## Revendications

1. Procédé de revêtement d'un tuyau flexible textile (4) d'un matériau d'étanchéité thermoplastique (5), en particulier à base de polyuréthane, dans un dispositif de revêtement (2), dans lequel le tuyau flexible textile (4) présente une direction longitudinale et une direction circonférentielle et est fabriqué en continu dans les directions longitudinale et circonférentielle, en particulier est formé d'un tuyau flexible tricoté circulaire,
dans lequel le tuyau flexible textile (4) est amené au dispositif de revêtement (2) et est enfilé en continu par le haut sur un mandrin (6) s'étendant dans la direction longitudinale et à peu près dans la direction verticale (8) et est transporté en continu vers le bas sur ce mandrin (6),
dans lequel, pendant cela, le mandrin (6) est supporté et orienté en position par au moins un moyen de support (10) prévu à l'extérieur du tuyau flexible textile (4),
dans lequel le moyen de support (10) comprend une paire de cylindres de support (12) et le mandrin (6) est disposé et étendu au-dessus de la paire de cylindres de support (12) de sorte qu'il prend appui par une extrémité longitudinale inférieure sur la paire de cylindres de support (12) qui absorbent au moins en partie un poids du mandrin,
dans lequel le matériau d'étanchéité thermoplastique (5) est fourni dans un état chauffé et fluide et est fourni à toute une circonférence extérieure (38) du tuyau flexible textile (4) transporté en continu sur le mandrin (6) de telle sorte que le matériau d'étanchéité thermoplastique (5) peut pénétrer partiellement dans le tuyau flexible textile (4) et/ou adhérer à la circonférence extérieure (38) du tuyau flexible textile (4) et forme un revêtement fermé et plan,
dans lequel le tuyau flexible textile (4) ainsi revêtu est ensuite retiré en continu vers le bas à partir du mandrin (6),
et dans lequel le mandrin (6) présente un changement de section transversale (20) dans la direction longitudinale entre une extrémité longitudinale inférieure et une extrémité longitudinale supérieure dans une zone du mandrin qui est disposée en amont du revêtement du tuyau flexible textile, de sorte qu'un collier de support (22) est formé en conséquence, et que le mandrin (6) est supporté sur le collier de support (22) par un autre moyen de support (10) prévu à l'extérieur du tuyau flexible textile (4), c'est-à-dire en plus du support du mandrin à son extrémité inférieure.

2. Procédé selon la revendication 1, **caractérisé par le fait que** le tuyau flexible textile revêtu (4) est transféré dans une forme de stockage, en particulier dans une forme pliée aplatie, et puis est enroulé sous forme de rouleau ou de balle ou disposé en Z, c'est-à-dire déposé en va-et-vient en couches superposées, ou est directement amené à un traitement ultérieur ou une utilisation ultérieure, en particulier est introduit dans un corps tubulaire à revêtir.

3. Procédé selon la revendication 1 ou 2, **caractérisé par le fait que** le tuyau flexible textile (4) ainsi revêtu est refroidi encore au niveau du mandrin (6).

4. Procédé selon une ou plusieurs des revendications précédentes, **caractérisé par le fait que** le mandrin (6) présente un corps de mandrin (15) allongé et à son extrémité longitudinale inférieure un corps de support de forme (16) au moyen duquel le mandrin (6) est supporté sur le moyen de support (10), en particulier dans lequel le corps de support de forme (16) peut être réglable dans la direction longitudinale par rapport au corps de mandrin (15).

5. Procédé selon la revendication 4, **caractérisé par le fait que** le corps de support de forme (16) agit de concert de manière complémentaire avec le moyen de support (10) de telle sorte que le mandrin (6) est non seulement supporté verticalement, mais est en outre stabilisé en position dans la direction latérale et/ou dans la direction circonférentielle, en particulier que le corps de support de forme (16) est conçu à peu près de manière complémentaire à une fente entre cylindres se rétrécissant (14) dans une paire de cylindres de support (12) de sorte qu'il peut s'engager en partie dans ladite fente entre cylindres (14) et est ainsi stabilisé en position.

6. Procédé selon une ou plusieurs des revendications précédentes, **caractérisé par le fait que** le mandrin (6) présente à son extrémité inférieure ou le corps de support de forme (16) présente au moins un ou de préférence deux rouleaux (57) disposés parallèlement l'un à l'autre qui, en interposant le tuyau flexible textile revêtu (4), peuvent rouler contre le moyen de support (10) pour le mandrin (6), en particulier contre une paire de cylindres de support (12).

7. Procédé selon l'une quelconque des revendications précédentes, **caractérisé par le fait que** le moyen de support (10) pour supporter le mandrin sur le collier de support (22) est formé par une paire de cylindres de support opposés (24), en particulier par une première paire de cylindres de support (24) et par une deuxième paire de cylindres de support (24) qui est disposée de manière décalée de 90° par rapport à la première paire de cylindres de support (24).

8. Procédé selon une ou plusieurs des revendications précédentes, **caractérisé par le fait que** le tuyau flexible textile (4) est fourni et amené dans un état plat et est élargi à l'intérieur du dispositif de revêtement (2) de manière à présenter une forme de tunnel et est enfilé sur le mandrin (6).

9. Dispositif de revêtement (2) pour la mise en œuvre du procédé de revêtement d'un tuyau flexible textile (4) d'un matériau d'étanchéité thermoplastique (5) selon une ou plusieurs des revendications précédentes, comprenant
un mandrin allongé en forme de tige (6) et un moyen de support (10) pour supporter le mandrin (6) dans une direction pour l'essentiel verticale (8), dans lequel le mandrin (6) est situé à l'intérieur du tuyau flexible textile (4),
dans lequel le moyen de support (10) comprend une paire de cylindres de support (12) et le mandrin (6) est disposé et étendu au-dessus de la paire de cylindres de support (12) de sorte qu'il prend appui par une extrémité longitudinale inférieure sur la paire de cylindres de support (12) qui absorbent au moins en partie un poids du mandrin,
un dispositif d'amenée et de transport (26) pour amener le tuyau flexible textile (4) par le haut jusqu'au mandrin (6) et pour transporter en continu le tuyau flexible vers le bas sur le mandrin,
un dispositif (36) pour amener, à la circonférence extérieure (38) du tuyau flexible textile (4), du matériau d'étanchéité thermoplastique fondu (5) de telle sorte que le tuyau flexible (4) soit revêtu avec un poids de revêtement sensiblement uniforme par unité de surface, le mandrin (6) s'étendant à travers ce dispositif (36) avec le tuyau flexible (4) transporté en continu sur le mandrin (6),
un dispositif de retrait (56) pour retirer le tuyau flexible textile (4) revêtu,
et dans lequel le mandrin (6) présente un changement de section transversale (20) dans la direction longitudinale entre une extrémité longitudinale inférieure et une extrémité longitudinale supérieure dans une zone du mandrin qui est disposée en amont du revêtement du tuyau flexible textile, de sorte qu'un collier de support (22) est formé en conséquence, et que le mandrin (6) peut être supporté sur le collier de support (22) par un autre moyen de support (10) prévu à l'extérieur du tuyau flexible textile (4), c'est-à-dire en plus du support du mandrin à son extrémité inférieure.

10. Dispositif de revêtement (2) selon la revendication 9, **caractérisé par** un dispositif destiné à transférer le tuyau flexible textile revêtu dans une forme de stockage ou par un dispositif destiné à introduire directement le tuyau flexible textile revêtu dans un corps tubulaire à revêtir.

11. Dispositif de revêtement (2) selon la revendication 9 ou 10, **caractérisé par le fait qu'**un dispositif de refroidissement (50) est prévu pour refroidir le tuyau flexible textile (4) revêtu de matériau d'étanchéité thermoplastique (5), dans lequel le dispositif de refroidissement (50) est disposé en aval du dispositif (36) d'amenée de matériau d'étanchéité thermoplastique fondu (5) à la circonférence extérieure (38) du tuyau flexible textile (4).

12. Dispositif de revêtement (2) selon l'une quelconque des revendications 9 à 11, **caractérisé par le fait que** le mandrin (6) présente un corps de mandrin allongé (15) et est rétréci et de préférence arrondi à son extrémité supérieure (32).

13. Dispositif de revêtement (2) selon l'une quelconque des revendications 9 à 12, **caractérisé par le fait que** le mandrin (6) présente un corps de mandrin (15) allongé et à son extrémité longitudinale inférieure un corps de support de forme (16) au moyen duquel le mandrin (6) peut être supporté sur le moyen de support (10), en particulier dans lequel le corps de support de forme (16) peut être réglable dans la direction longitudinale par rapport au corps de mandrin (15).

14. Dispositif de revêtement selon la revendication 13, **caractérisé par le fait que** le corps de support de forme (16) comprend au moins un ou de préférence deux rouleaux (57) disposés parallèlement l'un à l'autre, qui, en interposant le tuyau flexible textile revêtu (4), peuvent rouler contre le moyen de support (10) pour le mandrin (6), en particulier contre une paire de cylindres de support (12).

15. Dispositif de revêtement selon l'une quelconque des revendications 9 à 14, **caractérisé par le fait que** le moyen de support (10) pour supporter le mandrin sur le collier de support (22) est formé par une paire de cylindres de support opposés (24), en particulier par une première paire de cylindres de support (24) et par une deuxième paire de cylindres de support qui est disposée de manière décalée de 90° par rapport à la première paire de cylindres de support (24).

16. Dispositif de revêtement selon l'une quelconque des revendications 9 à 15, **caractérisé par le fait que** le dispositif d'amenée et de transport (26) est conçu de telle sorte qu'il amène le tuyau flexible textile (4) à l'état aplati en direction du mandrin (6) et le transporte à l'état élargi sur le mandrin (6).
